Europäisches Patentamt

European Patent Office

Office européen des brevets

(11) Publication number: **0 185 305 B1**

(12) **EUROPEAN PATENT SPECIFICATION**

(45) Date of publication of patent specification: **25.03.92**   (51) Int. Cl.⁵: **H02G  15/25**, H02G 15/24

(21) Application number: **85115747.9**

(22) Date of filing: **11.12.85**

(54) **Joint between a cable having an extruded insulation and a cable having an insulation aided by a dielectric fluid.**

(30) Priority: **17.12.84 IT 2408984**

(43) Date of publication of application:
**25.06.86 Bulletin  86/26**

(45) Publication of the grant of the patent:
**25.03.92 Bulletin  92/13**

(84) Designated Contracting States:
**AT BE CH DE FR GB LI LU NL SE**

(56) References cited:
**DE-A- 2 601 545**
**GB-A- 782 256**

(73) Proprietor: **PIRELLI CAVI S.p.A.**
**Piazzale Cadorna, 5**
**I-20123 Milan(IT)**

(72) Inventor: **Lanfranconi, Gianmario**
**Piazza Liberta, 16**
**Trezzo D'Adda(IT)**
Inventor: **Vecellio, Bernardino**
**Via Piccinni, 21**
**Milan(IT)**

(74) Representative: **Giannesi, Pier Giovanni et al**
**Pirelli S.p.A. Direzione Brevetti Piazzale**
**Cadorna, 5**
**I-20123 Milano(IT)**

EP 0 185 305 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention refers to a joint between the cable having an extruded insulation and the cable having an insulation including a dielectric fluid as the oil filled cables, the so-called "pipe" type cables, the gas-insulated cables and the compound-insulated cables, both of single-core and multi-core type cables.

The joints used up to now to connect cables having an extruded insulation and cables having an insulation including a dielectric fluid comprise, at each end of the cables, a sealing end of specific type to finish the cable on which said sealing end is mounted, a mechanical and electrical connection between the lugs of the sealing ends and a metal box, filled with an insulating fluid, that tightly encloses the sealing ends.

The known joints, whose structure has been summarily described above, although differing from one another for their constructive pecularities, are of complex construction. Therefore their carrying out is difficult and delicate especially in the case in which said known joints must be used in the field of the high voltages where the involved high electric stresses can cause the setting out of service of the joints in presence of even small imperfections of realization.

Another drawback of the known joints of the type in question is that these latter have a considerable encumbrance in radial direction and precisely a greater encumbrance in radial direction than that of the known joints between cables of the same type.

The greater encumbrance of the known joints of the type in question with respect to the known ones between cables of the same type is substantially due to the presence of the box filled by a dielectric fluid that encloses the two sealing ends fitted around the ends of the cable.

The great radial encumbrance of the known joints of the type in question represents a drawback since it impedes the use in all those situations in which the laying of an electric line comprising cables having an extruded insulation and cables having an insulation aided by a dielectric fluid must be effected in pre-existing structures, as for instance the foundations of industrial buildings, the structure of bridges and the like which impose limitations in radial direction to the components of the line.

Moreover, in the case of lines that have already been laid, formed by a plurality of cables for instance all oil filled cables, it can be impossible to substitute a portion of an oil filled cable with a portion of an extruded-insulation cable just owing to the great encumbrance of the known joints necessary to carry out the connection between cables of different type.

In fact, if the cavity in which the joint has to be joused is in a constructive work that possesses radial dimensions suitable only for a joint between oil filled cables, this cavity is not able to house a known joint of the type referred to by the present invention due to the greater radial dimensions of this latter.

An example of a known joint of the type above, described in DE-A-2.601.545, provides inside an outer sheath, which directly links together the outer sheaths of the two cables, a ferrule that directly connects the two cable conductors.

Around said ferrule a metallic sleeve, externally covered by an insulating body having tapered ends, is present and an oil sealing gasket is interposed between the ferrule and the metallic sleeve.

A stratified insulation impregnated with insulating fluid covers a tapered end of the insulating body and the terminal portion of the insulation of the cable including an insulating fluid; moreover an insulation of cross linked material covers the other tapered end of the insulating body and the terminal portion of the insulation of the cable having an extruded insulation.

Another known joint for connecting together two oil filled cables described in GB-A-782.256 provides a through insulator in epoxy resins in which a metallic bar id embedded.

The conductors of the two cables are mechanically connected to the metallic bar and statified insulations covers these connections.

Moreover a metallic sheath connects both cable sheaths to the through insulator body.

The aim of the present invention is a joint between a cable having an extruded insulation and a cable having an insulation aided by a dielectric fluid that has the radial encumbrance smaller than the known ones and in particular an encumbrance in radial direction substantially of the same order of magnitude as that of the known joint by which the connection between cables of the came type is carried out and that has a simple structure and therefore is rapidly carried out and is reliable also in presence of high voltages.

The object of the present invention is a stop joint between a cable having an extruded insulation and a cable having an insulation including a dielectric fluid comprising:

- at least a through insulator (1) constituted by a body formed by a compound based on epoxy resins embedding a metal bar (5) whose ends (6, 7) project from the tapered truncated-cone shaped ends (3, 4) of the through insulator body,
- a metal box (19), tightly connected to the through insulator (1) and to the metal sheath (14) of the cable (10) having the insulation (11) including a dielectric fluid and enclosing a first mechanical and electrical connection (8) between the conductor (9) of this latter and the bar (5) of the through insulator (1) and a stratified insulation (15) encircling the first connection (8), said metal box (19) being completely filled with the dielectric fluid of the cable (10),

- a second mechanical and electrical connection (24) between the conductor (22) of the extruded insulation cable (23) and the bar (5) of the through insulator (1),
- an insulation (27) of cross-linked material covering the second connection (24),

said joint being characterized in that said insulation (27) of cross-linked material, covering the second connection is of a compound based on a polymer selected from EPR, EPDM and in that at least an adhesive layer (28, 30, 31), for bonding the insulation (27) to the through insulator (1), is interposed between the frusto-conical surface of the insulator end (4) and the facing surface of the insulation (27) of cross-linked material, said bond having a mechanical stripping strength not lower than 1 kg/cm$^2$.

The present invention will be better understood by the following detailed description mae by way of non-limiting example with reference to the figures of the attached sheet of drawing in which:

- figure 1    is a lateral view and a partial section of a joint according to the present invention;
- figure 2    is a section of a particular of a joint according to the invention in an alternative embodiment.

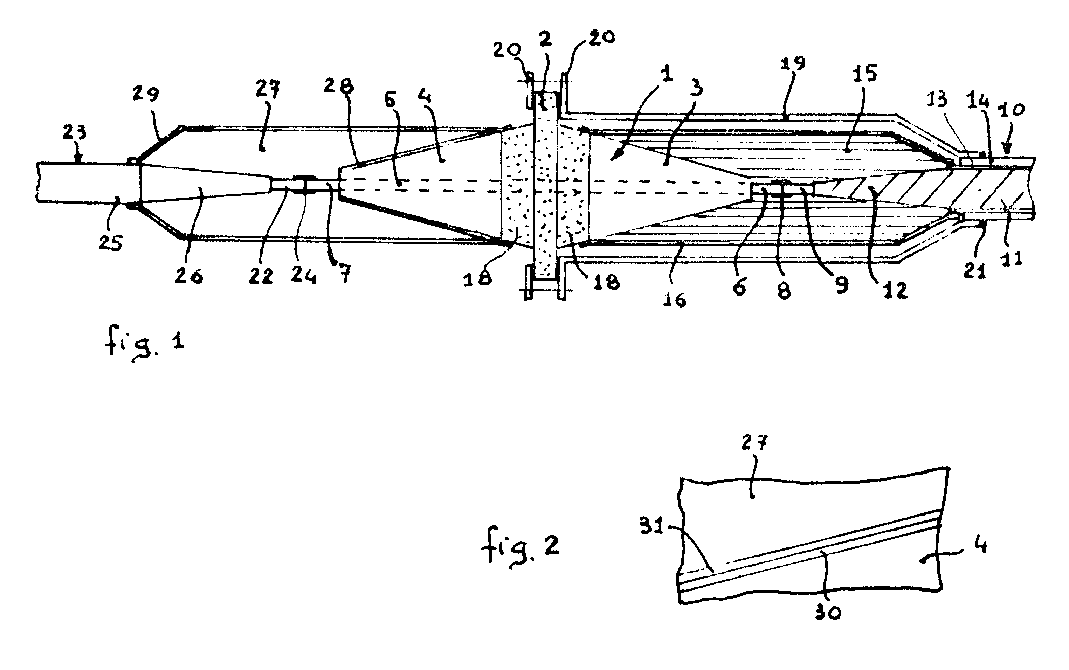

As shown in figure 1, the joint has a through insulator 1 constituted by a body of a compound based on epoxy resins of type known per se in which a central zone 2 and ends 3 and 4 tapered according to a truncated-cone configuration are noticed.

The central zone 2 and the roots 18 of the ends 3 and 4 of the insulator are covered with a conductive varnish.

The body of the through insulator 1 embeddes a metal bar 5, for instance of aluminium, whose ends 6 and 7 project from the ends 3 and 4 of the through insulator body.

The previously described through insulator of a joint according to the invention has the same structure as that of the through insulators of the stop joints between oil-filled cables.

The end 6 of the bar 5 of the through insulator 1 is connected, in a way known per se, for instance through a ferrule 8 or a welding and the like, to the conductor 9 of a cable having the insulation added by a dielectric fluid as for instance an oil-filled cable 10.

The end of the oil-filled cable 10 present in the joint is prepared by stepwise stripping for a part 12 the solid stratified insulation 11, giving it a truncated-cone tapered shape, the outer semiconductive layer 13 and the metal sheath 14 of the cable itself.

An insulation 15, formed by winding paper tapes that cover both the truncated-cone end 12 of the insulation of the oil-filled cable 10 and the end 3 of the through insulator 1, is arranged on the mechanical and electrical connection between the bar 6 of the through insulator and the conductor 9 of the oil-filled cable 10.

In alternative, the insulation 15 can be formed by a plurality of superimposed cylindrical sleeves, each of them is formed in place by winding paper tapes, radiusing each sleeve at the tapered surfaces of the through insulator and of the cable insulation through windings of crêpe paper tapes.

Moreover a semiconductive layer 16 encircles the insulation 15 up to overlap the outer semiconductive screen 13 of the oil-filled cable 10 and to the root 18 of the end 3 covered with a conductive varnish.

A metal box 19 encloses the whole and is tightly connected at one part to the central zone 2 of the body of the through insulator 1 through a flange and counter-flange system 20 and at the other part is tightly connected to the metal sheath 14 of the oil-filled cable 10 by means of a welding 21.

Moreover the end 7 of the bar 5 of the through insulator 1 is mechanically and electrically connected to the conductor 22 of a cable having a cross-linked extruded insulation, for instance of compounds based on EPR, EPDM, by means of a ferrule 24 or a welding and the like.

The end 23 of the cable having the cross-linked extruded insulation is tapered according to a truncated-cone configuration and besides the conductor and the insulator presents also the outer semiconductive screen 25 stepwise stripped.

The mechanical and electrical connection between the conductor 22 of the cross-linked extruded insulation cable and the bar 5 is encircled by an insulation 27 which is hereinafter described in detail.

The insulation 27 covers also the truncated-cone tapered end of the insulation of the cable 23 and the end 4 of the through insulator 1, except the root 18 of said end that is covered with a conductive varnish.

The insulation 27 is preferably formed by winding a plurality of cross-linkable material tapes, for instance of cross-linkable EPR that following their cross-linking, carried out under pressure after the formation of the insulation itself, gives rise to the formation of a monolithic and compact body and permits to obtain, with the expedients suggested by the known technique for the elastomer-working, a bond of chemico-physical nature between the end 26 of the extruded insulation cable and the insulation 27 itself.

As previously said the insulation 27 covers also the end 4 of the through insulator 1 and is bonded to this latter through bonds of chemico-physical nature.

The bond of chemico-physical nature between the insulation 27 and the end 4 of the through insulator 1 is obtained by means of a layer of adhesive material 28 interposed between them which acts as a connecting bridge between the material of the through insulator constituted by a compound based on epoxy resins and the material of the insulation 27 constituted by a cross-linked elastomeric material, for instance of cross-linked EPR.

The layer 28 can be formed by using an adhesive material which has the following properties:

- to assure the absence of bubbles or cavities also of the least dimension between the surfaces of the through insulator and the cross-linked insulation bonded by said material,
- the bonding realized through the adhesive between the material constituting the insulator body and the cross-linked insulation must have a mechanical stripping strength not lower than 1 kg/cm$^2$ and anyhow a mechanical strength able to avoid the least separation between the elements bonded by said adhesive under the mechanical stresses that can arise in the joint during laying or working.

In particular the adhesive material for the layer 28 can be that which results from the use of one of the different materials existing on the market to realize a bond between the materials based on epoxy resins and the material based on cross-linked EPR forming the cross-linked insulation. Examples of materials are the product commercially known as "4400" manufactured by HENKEL, and the product commercially known as "TIXON 508" manufactured by Dayton Chemical Division.

A layer of semiconductive material 29 constituted for instance by a conductive varnish, covers the insulation 27 overlapping the semiconductive layer 25 of the extruded insulation cable 23 and the root of the end 4 of the through insulator covered with a conductive varnish.

Figure 2 shows a particular of an alternative embodiment of a joint according to the present invention.

A joint according to this alternative embodiment differs from the embodiment of figure 1 only in the manner of realizing the chemico-physical bond between the insulating material 27 and the end 4 of the through insulator.

As shown in the figure 2 the bond between the just cited elements is obtained by forming two adhesive layers of different nature doubled together and precisely by a first adhesive layer 30 in direct contact with the surface of the end 4 of the through insulator 1 and by a layer 31 overlapped to the layer 30 and in direct contact with the insulation 27 of vulcanized material.

In this embodiment the adhesive material forming the layer 30 is of a type suitable for realizing a chemico-physical adhesion particularly efficacious with the material based on epoxy resin of the through insulator 4, while the layer 31 is formed by means of an adhesive material particularly suitable for realizing a chemico-physical bond with the cross-linked elastomeric material, for instance of EPR of the layer 27. Moreover the adhesive materials forming the layers 30 and 31 are of type suitable for realizing between them a particularly efficacious chemico-physical adhesion.

The layers 30 and 31 can be formed by means of adhesive materials having the following properties:

- to assure the absence of bubbles or cavities also of the least dimension between the through insulator and the cross-linked insulation bonded by said materials,
- the bonding realized through the two adhesives between the material forming the insulator body and the cross-linked insulation must have a mechanical stripping strength not lower than 1 kg/cm$^2$ and anyhow a mechanical strength able to avoid the least separation between the elements that, are bonded under the mechanical stresses that can arise in the joint during laying or working.

In particular the adhesive material for the layer 30 can be that which results from the use of one of the various materials existing on the market to realize a bond with the materials based on epoxy resins and the adhesives compatible for the bond with cross-linked materials based on EPR.

Moreover the adhesive material for the layer 31 can be that which results from the use of one of the various materials existing on the market to realize a bond with the cross-linked materials based on EPR and the adhesives compatible for the bond with the materials based on epoxy resins.

Examples of materials for the layer 30 are the product commercially known with "chemosil 211" manufactured by HENKEL and the product commercially known with "THIXON 508" manufactured by Dayton Chemical Division.

Examples of materials for the layers 31 are the product commercially known under the trade mark "X2311" manufactured by HENKEL and the product commercially known under the trade mark "P7" manufactured by Dayton Chemical Division.

The embodiments shown in the figures of a stop joint according to the present invention concern single-core cables, but this has not to be understood in a limiting sense, since by means of the joints according to the present invention it is possible to effect the connection also between multi-core cables having an extruded insulation and multi-core cables having the insulation aided by a dielectric fluid.

In this latter case that is not represented by figures, the through insulators to be provided will be as many as the cores of the cables to be connected are.

The only difference will be that the central zones 2 of the through insulators will be connected to each other in a tight manner.

For instance the central zones 2 could be closely connected to each other originating a single monolithic plate of an epoxy resin covered with a conductive varnish.

In alternative said plate can be of metallic material for instance non-magnetic steel and foresee as many holes as the through insulators for tightly receiving these latter are.

From the previously reported description and from the following considerations it is understood that by means of the joints according to the present invention the aimed purposes are reached.

First of all the thicknesses of the insulations that in the joints according to the invention encircle the connections between cables and through insulator are practically equal to the thickness of the insulations existing in the joints between cables of the same type. This means to reduce at the minimum the radial encumbrance for the type of joints referred to by the present invention.

Moreover, the joints according to the invention are of easy and simple realization since they are obtained by assembling together pre-fabricated elements, as the through insulators and the metal box and their realization involves a tape winding operation according to a known technique for the formation of the insulations.

Finally, the close contact, realized through the chemico-physical bonds between the material based on epoxy resins of the through insulator and the insulation encircling the mechanical and electrical connection of said through insulator with the extruded insulation cable permits to overcome those risks of perforations of the joint that could arise especially at high voltages in absence of said close contact owing to the possible presence of small quantities of air in the zone of contact between the above cited elements.

Therefore, the joints besides being of a rapid realization show a considerable reliability especially when used in the high voltage field.

Although some embodiments have been illustrated and described, it is understood that the present invention includes in its scope any other alternative embodiment within the definition of the claims accessible to a technician of the field.

## Claims

1. A stop joint between a cable having an extruded insulation and a cable having an insulation including a dielectric fluid comprising:
   - at least a through insulator (1) constituted by a body, formed by a compound based on epoxy resins, embedding a metal bar (5) whose ends (6, 7) project from the tapered truncated-cone shaped ends (3, 4) of the through insulator body,
   - a metal box (19), tightly connected to the through insulator (1) and to the metal sheath (14) of the cable (10) having the insulation (11) including a dielectric fluid and enclosing a first mechanical and electrical connection (8) between the conductor (9) of this latter and the bar (5) of the through insulator (1) and a stratified insulation (15) encircling the first connection (8), said metal box (19) being completely filled with the dielectric fluid of the cable (10),
   - a second mechanical and electrical connection (24) between the conductor (22) of the extruded insulation cable (23) and the bar (5) of the through insulator (1),
   - an insulation (27) of cross-linked material covering the second connection (24),
   said joint being characterized in that:
   - said insulation (27) of cross-linked material, covering the second connection is of a compound based on a polymer selected from EPR, EPDM and in that at least an adhesive layer (28, 30, 31), for bonding the insulation (27) to the through insulator (1), is interposed between the frusto conical surface of the insulator end (4) and the facing surface of the insulation (27) of cross-linked material, said bond having a mechanical stripping strength not lower than 1 kg/cm$^2$.

2. Stop joint according to claim 1, characterized by the fact that two adhesive layers (30, 31), doubled together and reciprocally linked, are interposed between through insulator (1) and insulation (27) of cross-linked material covering the mechanical and electrical connection (24) between the metal bar (5) of the through insulator (1) and the conductor (22) of the cross-linked extruded insulation cable (23), one (30) of said adhesive layers being linked to the surface of the insulator (1) and the other layer (31) being linked to the surface of the insulation (27) of cross-linked material.

3. Stop joint according to any one of the preceding claims, characterized by the fact that the insulation (27) of cross-linked material is a monolithic and compact body obtained in consequence of the cross-linking of overlapped windings of cross-linkable material tapes.

**Revendications**

1. Un joint d'arrêt entre un câble à isolation extrudée et un câble à isolation incluant un fluide diélectrique, comprenant :
   - au moins un isolant de traversée (1) constitué par un corps formé d'un composé à base de résines époxy, encastrant une barre métallique (5) dont les extrémités (6, 7) font saillie à partir des extrémités effilées (3, 4) en forme de tronc de cône du corps isolant de traversée,
   - un boîtier métallique (19), connecté de façon étanche à l'isolant de traversée (1) et à l'enveloppe métallique (14) du câble (10) dont l'isolation (11) comprend un fluide diélectrique et enfermant une première connexion mécanique et électrique (8) entre le conducteur (9) de ce dernier et la barre (5) de l'isolant de traversée (1) et une isolation stratifiée (15) encerclant la première connexion (8), ledit boîtier métallique (19) étant complètement rempli du fluide diélectrique du câble (10),
   - une deuxième connexion mécanique et électrique (24) encre le conducteur (22) du câble (23) à isolation extrudée et la barre (5) de l'isolant de traversée (1),
   - une isolation (27) en matière réticulée couvrant la deuxième connexion (24),
      ledit joint étant caractérisé en ce que :
      ladite isolation (27) en matière réticulée, couvrant la deuxième connexion, est un composé à base de polymère choisi parmi l'EPR, l'EPDM et en ce qu'au moins une couche adhésive (28, 30, 31), destinée à relier l'isolation (27) sur l'isolant de traversée (1), est interposée entre la surface tronconique de l'extrémité (4) d'isolant et la surface tournée vers lui de l'isolation (27) en matière réticulée, ladite liaison présentant une résistance à l'arrachement mécanique qui n'est pas inférieure à 1 kg/cm$^2$.

2. Joint d'arrêt selon la revendication 1 caractérisé par le fait que deux couches adhésives (30, 31) qui se doublent l'une l'autre et sont liées entre elles, sont interposées entre l'isolant de traversée (1) et l'isolation (27) en matière réticulée couvrant la connexion mécanique et électrique (24) entre la barre métallique (5) de l'isolant de traversée (1) et les conducteurs (22) du câble (23) à isolation extrudée réticulée, l'une (30) desdites couches adhésives étant liée à la surface de l'isolant (1) et l'autre couche (31) étant liée à la surface de l'isolation (27) en matière réticulée.

3. Joint d'arrêt selon l'une quelconque des revendications précédentes, caractérisé par le fait que l'isolation (27) en matière réticulée est un corps monolithique et compact obtenu par suite de la réticulation d'enroulements superposés de bandes de matière réticulable.

**Patentansprüche**

1. Halteverbindung zwischen einem Kabel mit extrudierter Isolierung und einem Kabel mit einer durch ein dielektrisches Fluidum unterstützten Isolierung, umfassend:
   - wenigstens einen durchgehenden Isolator (1), der durch einen Körper dargestellt ist, welcher aus einer Masse auf der Basis von Epoxyharzen gebildet ist und in welchen ein Metallstab (5) eingebettet ist, dessen Enden (6,7) von den sich verjüngenden kegelstumpfförmigen Enden (3,4) des durchgehenden Isolatorkörpers vorragen,
   - ein Metallgehäuse (19), welches mit dem durchgehenden Isolator (1) und mit dem Metallmantel (14) des Kabels (10), welches die Isolierung (11) hat, die ein elektrisches Fluidum umfaßt, fest verbunden ist und eine erste mechanische und elektrische Verbindung (8) zwischen dem Leiter (9) des letzteren Kabels und dem Stab (5) des durchgehenden Isolators (1) und eine Schichtisolierung (15) umschließt, welche die erste Verbindung (8) umgibt, wobei das Metallgehäuse (19) mit dem dielektrischen Fluidum des Kabels (10) vollständig gefüllt ist,
   - eine zweite mechanische und elektrische Verbindung (24) zwischen dem Leiter (22) des Kabels (23) mit der extrudierten Isolierung und dem Stab (5) des durchgehenden Isolators (1),

      und

   - eine Isolierung (27) aus vernetztem Material, welche die zweite Verbindung (24) bedeckt,

dadurch **gekennzeichnet**, daß

- die Isolierung (27) aus vernetztem Material, welche die zweite Verbindung bedeckt, aus einer Masse gebildet ist auf der Basis eine Polymers, ausgewählt aus EPR, EPDM, und daß wenigstens eine Klebmittelschicht (28,30,31) zum Binden der Isolierung (27) an den durchgehenden Isolator (1) zwischen der kegelstumpfförmigen Fläche des Isolatorendes (4) und der zugewandten Fläche der Isolierung (27) aus vernetztem Material angeordnet ist, wobei die Verbindung eine mechanische Abschäl- bzw. Abstreiffestigkeit von nicht niedriger als 1 kg/cm$^2$ hat.

2. Halteverbindung nach Anspruch 1, dadurch gekennzeichnet, daß zwei Klebmittelschichten (30,31), die zusammen gedoppelt und wechselseitig vernetzt sind, zwischen dem durchgehenden Isolator (1) und der Isolierung (27) aus vernetztem Material, welche die mechanische und elektrische Verbindung (24) zwischen dem Metallstab (5) des durchgehenden Isolators (1) und dem Leiter (22) des Kabels (23) mit der vernetzten extrudierten Isolierung bedeckt angeordnet sind, wobei eine (30) der Klebemittelschichten mit der Oberfläche des Isolators (1), und die andere Schicht (31) mit der Oberfläche der Isolierung (27) aus vernetztem Material vernetzt ist.

3. Halteverbindung nach irgendeinem der vorhergehenden Ansprüche, dadurch gekennzeichnet, daß die Isolierung (27) aus vernetztem Material ein monolithischer und kompakter Körper ist, der als Folge des Vernetzens von überlappten Windungen aus Bändern aus vernetzbarem Material erhalten ist.

fig. 1

fig. 2

8